(19) **Europäisches Patentamt**

**European Patent Office**

**Office européen des brevets**

(11) **EP 1 701 436 A1**

(12) **EUROPÄISCHE PATENTANMELDUNG**

(43) Veröffentlichungstag:
**13.09.2006 Patentblatt 2006/37**

(51) Int Cl.:
***H02M 7/48*** *(2006.01)*      ***H02J 3/18*** *(2006.01)*

(21) Anmeldenummer: **05405240.2**

(22) Anmeldetag: **11.03.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **ABB RESEARCH LTD.**
**8050 Zürich (CH)**

(72) Erfinder: **Häderli, Christoph**
**8047 Zürich (CH)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(54) **Umrichterschaltung**

(57)      Es wird eine Umrichterschaltung mit mindestens einem Teilumrichtersystem (1) angegeben, wobei bei jedem Teilumrichtersystem (1) ein erster und ein zweiter Anschluss (2, 3) vorgesehen ist und jedes Teilumrichtersystem (1) eine Vielzahl an ansteuerbaren Leistungshalbleiterschaltern (S1, S2, S3, S4) aufweist. Mit einem Teilumrichtersystem (1) ist ein kapazitiver Energiespeicher (4) verbunden, wobei die Spannung ($U_2$) über dem kapazitiven Energiespeicher (4) unipolar ist. Zum Betrieb der Umrichterschaltung ohne im wesentlichen konstante Spannung über dem kapazitiven Energiespeicher (4) und zur Vereinfachung und Platzeinsparung weist der kapazitive Energiespeicher (4) einen Wert aufweist, der eine periodische Absenkung der Spannung ($U_2$) über dem kapazitiven Energiespeicher (4) in der Grössenordnung von grösser oder gleich 30% bezüglich des Maximalwertes der Spannung ($U_1$) zwischen dem ersten und zweiten Anschluss (2, 3) zulässt, wobei eine Periode der Absenkung einer halben Netzperiode eines an die Umrichterschaltung anschliessbaren Wechselspannungsnetzes entspricht.

**Fig. 1**

EP 1 701 436 A1

## Beschreibung

### Technisches Gebiet

Die Erfindung bezieht sich auf das Gebiet der Leistungselektronik. Sie geht aus von einer Umrichterschaltung gemäss dem Oberbegriff des unabhängigen Anspruchs.

### Stand der Technik

Heute werden in vielen Anwendungen Umrichterschaltungen eingesetzt. Eine solche Umrichterschaltung, insbesondere zur Blindleistungskompensation und/oder zur Spannungserhaltung in einem Wechselspannungsnetz, ist beispielsweise in der RU 2 146 848 C1 angegeben. Darin umfasst die Umrichterschaltung mindestens ein Teilumrichtersystem, wobei bei jedem Teilumrichtersystem ein erster und ein zweiter Anschluss vorgesehen ist und jedes Teilumrichtersystem eine Vielzahl an ansteuerbaren Leistungshalbleiterschaltern aufweist. Die ansteuerbaren Leistungshalbleiterschalter sind typischerweise durch Schaltsignale mit einer vorgegebenen Schaltfrequenz angesteuert. Weiterhin ist bei der Umrichterschaltung der RU 2 146 848 C1 ein kapazitiver Energiespeicher vorgesehen, welcher mit einem Teilumrichtersystem verbunden ist, wobei der Betrag des Mittelwertes der Spannung zwischen dem ersten und zweiten Anschluss bezüglich einer Schaltperiode der ansteuerbaren Leistungshalbleiterschalter stets kleiner als der Betrag des Mittelwertes der Spannung über dem kapazitiven Energiespeicher bezüglich einer Schaltperiode der ansteuerbaren Leistungshalbleiterschalter ist, so dass der Strom durch jedes Teilumrichtersystem jederzeit kontrolliert fliessen kann. Typischerweise ist die Spannung über dem kapazitiven Energiespeicher unipolar, d.h. die Spannung behält stets ihre Polarität, insbesondere die positive Polarität, bei. Eine Umrichterschaltung nach der RU 2 146 848 C1 wird insbesondere als Spannungserhaltungseinrichtung und insbesondere als Blindleistungskompensationseinrichtung betrieben.

Der als eine Kapazität ausgeführte kapazitive Energiespeicher weist einen Wert auf, der eine Absenkung der Spannung über dem kapazitiven Energiespeicher in der Grössenordnung von maximal 10% bezüglich des Maximalwertes der Spannung zwischen dem ersten und zweiten Anschluss zulässt., d.h. es handelt sich um eine Kapazität mit einem hohen Kapazitätswert, so dass für den Betrieb der Umrichterschaltung die Spannung über dem kapazitiven Energiespeicher im wesentlichen konstant ist, d.h. die Spannung eine im wesentlichen konstante Gleichspannung ist. Um die Spannung über dem kapazitiven Energiespeicher für den Betrieb der Umrichterschaltung zudem, insbesondere beispielsweise bei einem Lastsprung an den Anschlüssen, konstant zu halten, ist eine Spannungsregelungseinrichtung vorgesehen, die die Leistungshalbleiterschalter eines jeden Teilumrichtersystems derart ansteuert, dass die Spannung über dem kapazitiven Energiespeicher konstant bleibt.

Problematisch bei einer Umrichterschaltung nach der RU 2 146 848 C1 ist, dass der als eine Kapazität ausgebildete kapazitive Energiespeicher einen hohen Kapazitätswert aufweist und zusätzlich eine Spannungsregelungseinrichtung benötigt, um die Spannung über dem kapazitiven Energiespeicher für den Betrieb der Umrichterschaltung konstant halten zu können. Allgemein ist aber eine Kapazität mit einem grossen Kapazitätswert üblicherweise aufwendig realisiert, damit dementsprechend teuer und benötigt viel Platz. Die ferner übliche Spannungsregelungseinrichtung zur Konstanthaltung der Spannung über dem kapazitiven Energiespeicher für den Betrieb der Umrichterschaltung erhöht beziehungsweise verkompliziert den Regelungsaufwand bezüglich der Umrichterschaltung erheblich, so dass weitere Kosten entstehen.

### Darstellung der Erfindung

Aufgabe der Erfindung ist es deshalb, eine Umrichterschaltung anzugeben, welche bei deren Betrieb ohne im wesentlichen konstante Spannung über einem mit einem Teilumrichtersystem der Umrichterschaltung verbundenen kapazitiven Energiespeicher auskommt und zudem unkompliziert, platzsparend und kostengünstig realisiert werden kann. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung umfasst mindestens ein Teilumrichtersystem, wobei bei jedem Teilumrichtersystem ein erster und ein zweiter Anschluss vorgesehen ist und jedes Teilumrichtersystem eine Vielzahl an ansteuerbaren Leistungshalbleiterschaltern aufweist. Weiterhin weist die Umrichterschaltung eine mit einem Teilumrichtersystem verbundenen kapazitiven Energiespeicher auf, wobei die Spannung über dem kapazitiven Energiespeicher unipolar ist. Erfindungsgemäss weist der kapazitive Energiespeicher einen Wert auf, der eine periodische Absenkung der Spannung über dem kapazitiven Energiespeicher in der Grössenordnung von grösser oder gleich 30% bezüglich des Maximalwertes der Spannung zwischen dem ersten und zweiten Anschluss zulässt, wobei eine Periode der Absenkung einer halben Netzperiode eines an die Umrichterschaltung anschliessbaren Wechselspannungsnetzes entspricht. Damit kommt die Umrichterschaltung bei deren Betrieb ohne im wesentlichen konstante Spannung, d.h. ohne eine im wesentlichen konstante Gleichspannung, über dem kapazitiven Energiespeicher aus. Vorteilhaft ist dadurch der Wert, d.h. der Gesamtkapazitätswert, des kapazitiven Energiespeichers wesentlich kleiner als die typischerweise hohen Kapazitätswerte bei aus dem Stand der Technik bekannten Umrichterschaltungen, so dass der kapazitive Energiespeicher beispielsweise als einfache, damit unkomplizierte und folglich kostengünstige Kapazität realisiert werden kann, die zudem vorteilhafterweise nur einen geringen Platzbedarf aufweist. Desweiteren kann eine normalerweise notwendige Spannungsregeleinrichtung zur Konstanthaltung der Spannung über dem kapazitiven Energiespeicher für den Betrieb der Umrichterschaltung realisierungsmässig sehr einfach gehalten sein oder ganz weggelassen werden, so dass der Regelungsaufwand bezüglich der Umrichterschaltung mit Vorteil reduziert werden kann und damit weitere Kosten eingespart werden können. Zudem können Oberschwingungen in der Spannung zwischen dem ersten und zweiten Anschluss amplitudenmässig durch die Spannungsabsenkung mit Vorteil reduziert beziehungsweise klein gehalten werden. Daraus resultieren dann auch vorteilhaft kleinere beziehungsweise reduzierte Oberschwingungen im Strom über dem ersten und zweiten Anschluss. Desweiteren führt die Spannungsabsenkung über dem kapazitiven Energiespeicher zu einer Reduktion des Rippels in der Spannung zwischen dem ersten und dem zweiten Anschluss. Dies führt wiederum zu einer Reduktion des Stromrippels. Zudem führt die Spannungsabsenkung zu einer Reduktion der Schaltverluste in den ansteuerbaren Leistungshalbleiterschaltern, was den Wirkungsgrad erhöht und eine höhere Gesamtleistung der erfindungsgemässen Umrichterschaltung ermöglicht.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigen:

Fig. 1     eine erste Ausführungsform einer erfindungsgemässen Umrichterschaltung,

Fig. 2     eine zweite Ausführungsform einer erfindungsgemässen Umrichterschaltung,

Fig. 3     eine dritte Ausführungsform einer erfindungsgemässen Umrichterschaltung,

Fig. 3a    zeitlicher Verlauf der Spannung über dem kapazitiven Energiespeicher und der Spannung und des Stromes an seriengeschalteten Primärwicklungen von Transformatoren gemäss der Ausführungsform der Umrichterschaltung nach Fig. 3 bei einem Wert des kapazitiven Energiespeichers, der eine periodische Absenkung der Spannung über dem kapazitiven Energiespeicher in der Grössenordnung von kleiner oder gleich 10% bezüglich des Maximalwertes der Spannung zwischen dem ersten und zweiten Anschluss zulässt,

Fig. 3b    zeitlicher Verlauf der Spannung über dem kapazitiven Energiespeicher und der Spannung und des Stromes an seriengeschalteten Primärwicklungen von Transformatoren gemäss der Ausführungsform der Umrichterschaltung nach Fig. 3 bei einem Wert des kapazitiven Energiespeichers, der eine periodische Absenkung der Spannung über dem kapazitiven Energiespeicher in der Grössenordnung von grösser oder gleich 30% bezüglich des Maximalwertes der Spannung zwischen dem ersten und zweiten Anschluss zulässt,

Fig. 4     eine vierte Ausführungsform einer erfindungsgemässen Umrichterschaltung,

Fig. 5     eine fünfte Ausführungsform einer erfindungsgemässen Umrichterschaltung,

Fig. 6     eine sechste Ausführungsform einer erfindungsgemässen Umrichterschaltung,

Fig. 7     eine siebte Ausführungsform einer erfindungsgemässen Umrichterschaltung,

Fig. 8     eine achte Ausführungsform einer erfindungsgemässen Umrichterschaltung,

Fig. 9     eine neunte Ausführungsform einer erfindungsgemässen Umrichterschaltung und

Fig. 10    eine zehnte Ausführungsform einer erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

**Wege zur Ausführung der Erfindung**

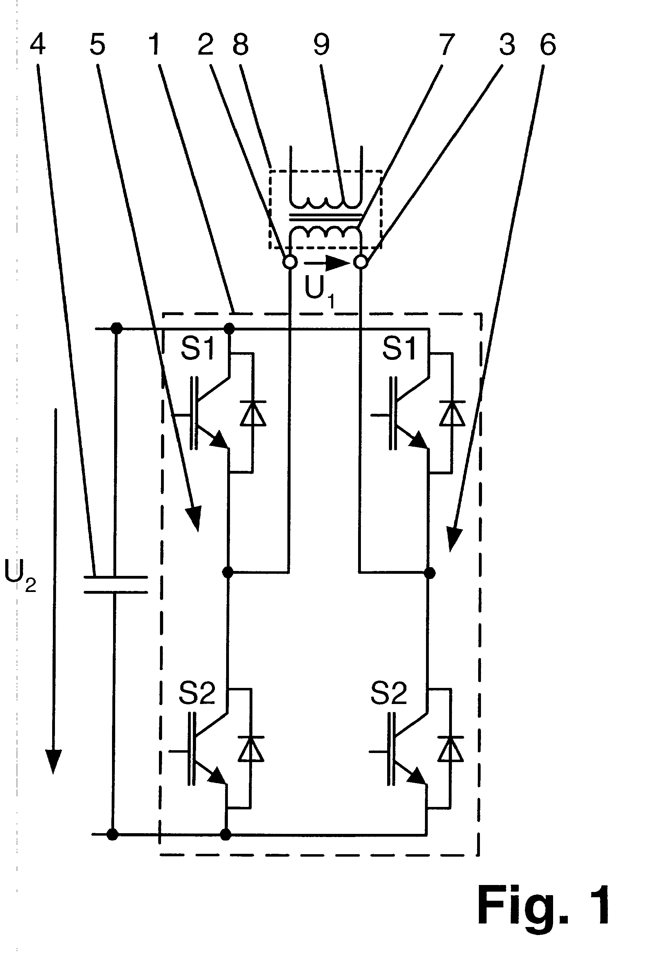

In Fig. 1 ist eine erste Ausführungsform einer erfindungsgemässen Umrichterschaltung dargestellt. Darin weist die Umrichterschaltung ein Teilumrichtersystem 1, allgemein mindestens ein Teilumrichtersystem 1, auf, wobei bei dem beziehungsweise bei jedem Teilumrichtersystem 1 ein erster und ein zweiter Anschluss 2, 3 vorgesehen ist und das beziehungsweise jedes Teilumrichtersystem 1 eine Vielzahl an ansteuerbaren Leistungshalbleiterschaltern S1, S2 aufweist. Die ansteuerbaren Leistungshalbleiterschalter S1, S2 sind allgemein durch Schaltsignale mit einer vorgegebenen Schaltfrequenz $f_s$, welche insbesondere variieren kann, angesteuert, wobei die Schaltfrequenz $f_s$ im Allgemeinen wie folgt definiert ist:

$$f_S = \frac{1}{T_S},$$

wobei $T_s$ eine Schaltperiode der ansteuerbaren Leistungshalbleiterschalter S1, S2 ist.

Das Teilumrichtersystem 1 ist allgemein mit einem kapazitiven Energiespeicher 4 verbunden, wobei der kapazitive Energiespeicher 4 gemäss Fig. 1 als eine einzige Kapazität ausgebildet ist und die Spannung $U_2$ über der ersten Kapazität 4 unipolar ist, d.h. die Spannung $U_2$ behält stets ihre Polarität, insbesondere die positive Polarität, bei. Zudem ist der Betrag des Mittelwertes der Spannung $U_1$ zwischen dem ersten und zweiten Anschluss 2, 3 bezüglich einer Schaltperiode $T_s$ der ansteuerbaren Leistungshalbleiterschalter S1, S2 stets kleiner als der Betrag des Mittelwertes der Spannung $U_2$ über dem kapazitiven Energiespeicher 4 bezüglich einer Schaltperiode $T_s$ der ansteuerbaren Leistungshalbleiterschalter S1, S2. Die Umrichterschaltung befindet sich also gemäss der vorstehend genannten Abhängigkeit der Spannung $U_1$ zwischen dem ersten und zweiten Anschluss 2 und der Spannung $U_2$ über dem kapazitiven Energiespeicher 4 stets im sogenannten "Boost-Mode" von den Anschlüssen 2, 3 zu dem kapazitiven Energiespeicher 4 gesehen.

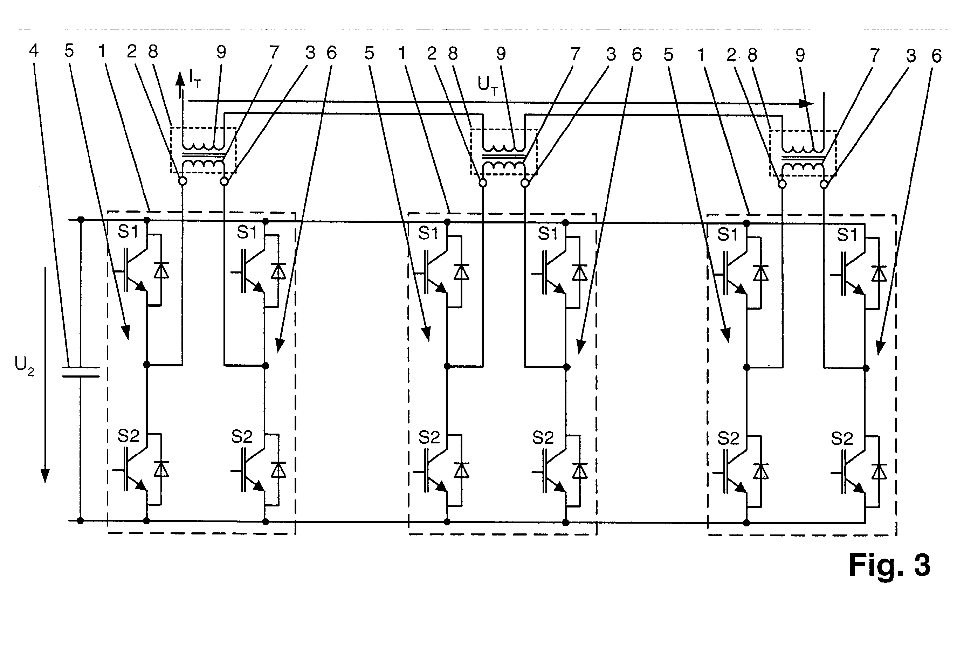

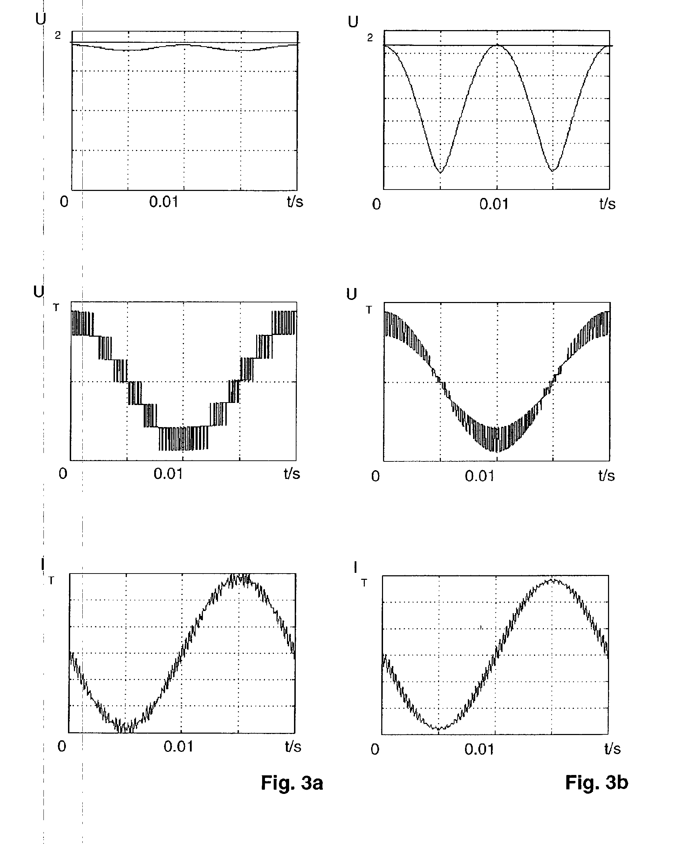

Erfindungsgemäss weist der kapazitive Energiespeicher 4 nun einen Wert auf, der eine periodische Absenkung der Spannung $U_2$ über dem kapazitiven Energiespeicher 4 in der Grössenordnung von grösser oder gleich 30% bezüglich des Maximalwertes der Spannung $U_1$ zwischen dem ersten und zweiten Anschluss 2, 3 zulässt, wobei eine Periode der Absenkung einer halben Netzperiode eines an die Umrichterschaltung anschliessbaren Wechselspannungsnetzes entspricht. Durch diese Massnahme kommt die erfindungsgemässe Umrichterschaltung bei deren Betrieb, insbesondere als Blindleistungskompensationseinrichtung oder als Spannungserhaltungseinrichtung, ohne im wesentlichen konstante Spannung $U_2$, d.h. ohne eine im wesentlichen konstante Gleichspannung, über dem kapazitiven Energiespeicher 4 aus. Vorteilhaft ist dadurch der Wert, d.h. der Gesamtkapazitätswert, des kapazitiven Energiespeichers 4 wesentlich kleiner als die typischerweise hohen Kapazitätswerte bekannter Umrichterschaltungen, so dass der kapazitive Energiespeicher 4 , wie in Fig. 1 gezeigt, beispielsweise als einfache, damit unkomplizierte und dementsprechend kostengünstige Kapazität realisiert werden kann, die zudem vorteilhafterweise nur einen geringen Platzbedarf aufweist. Desweiteren kann eine normalerweise notwendige Spannungsregeleinrichtung zur Konstanthaltung der Spannung $U_2$ über dem kapazitiven Energiespeicher 4 für den Betrieb der Umrichterschaltung realisierungsmässig sehr einfach gehalten sein oder ganz weggelassen werden, so dass der Regelungsaufwand bezüglich der Umrichterschaltung mit Vorteil reduziert werden kann und damit weitere Kosten eingespart werden können. Darüberhinaus lassen sich durch den Wert des kapazitiven Energiespeichers 4, der eine periodische Absenkung der Spannung $U_2$ über dem kapazitiven Energiespeicher 4 in der Grössenordnung von grösser oder gleich 30% bezüglich des Maximalwertes der Spannung $U_1$ zwischen dem ersten und zweiten Anschluss 2, 3 zulässt, vorteilhaft Oberschwingungen der Spannung $U_1$ zwischen dem ersten und zweiten Anschluss 2, 3 reduzieren oder bestenfalls ganz eliminieren, wobei auf diesen Vorteil anhand der dritten Ausführungsform der erfindungsgemässen Umrichterschaltung gemäss Fig. 3 noch anschaulich eingegangen wird. Durch die reduzierten Oberschwingungen der Spannung $U_1$ zwischen dem ersten und zweiten Anschluss 2, 3 resultieren dann auch vorteilhaft kleinere beziehungsweise reduzierte Oberschwingungen im Strom über dem ersten und zweiten Anschluss 2, 3. Darüber hinaus führt die Spannungsabsenkung über dem kapazitiven Energiespeicher 4 zu einer Reduktion des Rippels in der Spannung zwischen dem ersten und dem zweiten Anschluss. Dies führt wiederum zu einer Reduktion des Stromrippels. Zudem führt die Spannungsabsenkung zu einer Reduktion der Schaltverluste in den ansteuerbaren Leistungshalbleiterschaltern, da nicht immer die maximale Spannung geschaltet werden muss. Insbesondere im Zeitpunkt der grössten Ströme sind die Spannungen sehr klein. Der Wirkungsgrad der Umrichterschaltung sowie die Gesamtleistung der erfindungsgemässen Umrichterschaltung bei gleich bleiben Verlusten wird dadurch erhöht.

Es hat sich als besonders vorteilhaft erwiesen, dass der kapazitive Energiespeicher 4 einen Wert aufweist, der eine periodische Absenkung der Spannung $U_2$ über dem kapazitiven Energiespeicher 4 in der Grössenordnung von 50% bis 95% bezüglich des Maximalwertes der Spannung $U_1$ zwischen dem ersten und zweiten Anschluss 2, 3 zulässt, wobei eine Periode der Absenkung einer halben Netzperiode eines an die Umrichterschaltung anschliessbaren Wechselspannungsnetzes entspricht. Bei einer Spannungsabsenkung in der Grössenordnung von 50% oder 70% beträgt der Aussteuerungsgrad des Teilumrichtersystems 1 dann 75% beziehungsweise 91 %, so dass jeweils noch genügend Reserven vorhanden sind, weitere Oberschwingungen in der Spannung $U_1$ zwischen dem ersten und zweiten Anschluss 2, 3 und damit auch im Strom über dem ersten und zweiten Anschluss 2, 3 amplitudenmässig zu reduzieren beziehungsweise zu kompensieren. Bei einer Spannungsabsenkung in der Grössenordnung von 95% sind zudem die Schaltverluste in den ansteuerbaren Leistungshalbleiterschaltern minimal und der Gesamtkapazitätswert des kapazitiven Energiespeichers 4 kann zudem vorteilhaft sehr klein gewählt werden.

Gemäss Fig. 1 weist jedes Teilumrichtersystem 1 einen ersten Brückenzweig 5 und einen zu dem ersten Brückenzweig 5 parallel geschalteten zweiten Brückenzweig 6 auf, wobei jeder Brückenzweig 5, 6 zwei in Serie geschaltete ansteuerbare Leistungshalbleiterschalter S1, S2 umfasst und der Verbindungspunkt der ansteuerbare Leistungshalbleiterschalter S1, S2 des ersten Brückenzweiges 5 den ersten Anschluss 2 und der Verbindungspunkt der ansteuerbare Leistungshalbleiterschalter S1, S2 des zweiten Brückenzweiges 6 den zweiten Anschluss 3 bildet. Der jeweilige ansteuerbare Leistungshalbleiterschalter S1, S2 ist insbesondere durch einen Bipolartransistor mit isoliert angeordneter Gateelektrode (IGBT) gebildet, wobei eine zu dem Bipolartransistor antiparallel geschaltete Diode vorgesehen ist. Es ist aber auch denkbar einen vorstehend genannten ansteuerbaren Leistungshalbleiterschalter S1, S2 beispielsweise als Leistungs-MOSFET auszubilden, dem dann zusätzlich eine Diode antiparallel geschaltet ist. Desweiteren ist gemäss Fig. 1 der erste Brückenzweig 5 parallel mit dem kapazitiven Energiespeicher 4 verbunden. Mit einem gemäss Fig. 1 ausgeführten Teilumrichtersystem 1 lassen sich zwei Schaltspannungsniveaus, nämlich die positive und die negative Spannung $U_2$ über dem kapazitiven Energiespeicher, als Spannung $U_1$ zwischen dem ersten und zweiten Anschluss 2, 3, schalten.

Gemäss Fig. 1 ist am ersten und zweiten Anschluss 2, 3 des beziehungsweise allgemein eines jeden Teilumrichtersystems 1 ein induktives Element angeschlossen. Das induktive Element bewirkt vorteilhaft einen nahezu sinusförmigen Strom und nimmt den Spannungsrippel der Umrichterschaltung auf, d.h. es entsteht eine nahezu sinusförmige auf der Seite des Wechselspannungsnetzes. Das induktive Element kann auch nur am ersten Anschluss 2 oder nur am zweiten Anschluss 3 angeschlossen sein und als Spule realisiert sein. Vorzugsweise ist das induktive Element, wie in Fig. 1 gezeigt, als Sekundärwicklung 9 eines Transformators 8 ausgebildet. Damit wird vorteilhaft eine sinusförmige Spannung an der Primärwicklung 9 des Transformators 8 erreicht, wobei diese Spannung zudem sehr einfach durch geeignete Wahl des Übersetzungsverhältnisses zwischen Primärwicklung 9 und Sekundärwicklung 8 eingestellt werden kann.

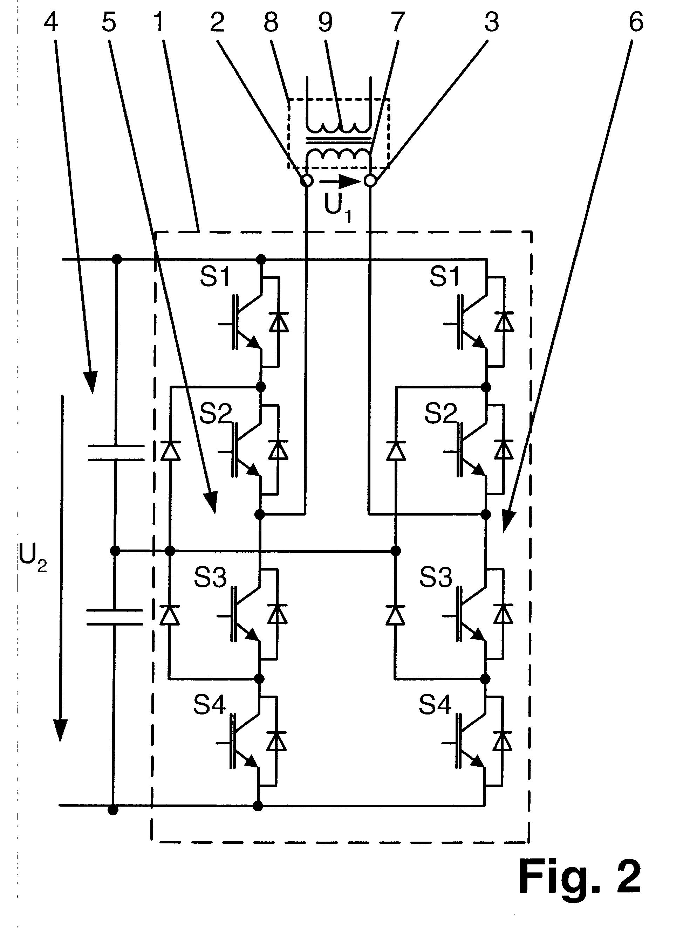

In Fig. 2 ist ferner eine zweite Ausführungsform einer erfindungsgemässen Umrichterschaltung gezeigt. Darin weist die im Unterschied zur Ausführungsform gemäss Fig. 1 jedes Teilumrichtersystem 1 einen ersten Brückenzweig 5 und einen zu dem ersten Brückenzweig 5 parallel geschalteten zweiten Brückenzweig 6 auf, wobei jeder Brückenzweig 5, 6 einen ersten, zweiten, dritten und vierten ansteuerbaren Leistungshalbleiterschalter S1, S2, S3, S4 aufweist und der erste, zweite, dritte und vierte ansteuerbaren Leistungshalbleiterschalter S1, S2, S3, S4 in Serie geschaltet sind. Der Verbindungspunkt des zweiten ansteuerbaren Leistungshalbleiterschalters S2 des ersten Brückenzweiges 5 bildet mit dem dritten ansteuerbaren Leistungshalbleiterschalter S3 des ersten Brückenzweiges 5 den ersten Anschluss 2 und der Verbindungspunkt des zweiten ansteuerbaren Leistungshalbleiterschalters S2 des zweiten Brückenzweiges 6 bildet mit dem dritten ansteuerbaren Leistungshalbleiterschalter S3 des zweiten Brückenzweiges 6 den zweiten Anschluss 3. Der jeweilige ansteuerbare Leistungshalbleiterschalter S1, S2, S3, S4 ist ebenfalls insbesondere durch einen Bipolartransistor mit isoliert angeordneter Gateelektrode (IGBT) gebildet, wobei eine zu dem Bipolartransistor antiparallel geschaltete Diode vorgesehen ist. Es ist aber auch denkbar einen vorstehend genannten ansteuerbaren Leistungshalbleiterschalter S1, S2, S3, S4 beispielsweise als Leistungs-MOSFET auszubilden, dem dann zusätzlich eine Diode antiparallel geschaltet ist. Gemäss Fig. 2 ist der kapazitive Energiespeicher 4 als eine Serienschaltung aus zwei Kapazitäten ausgebildet ist. Es versteht sich, dass die ansteuerbaren Leistungshalbleiterschalter S1, S2, S3, S4 gemäss Fig. 2 entsprechend der Ausführungsform der erfindungsgemässen Umrichterschaltung nach Fig. 1 beziehungsweise allgemein ebenfalls durch Schaltsignale mit einer vorgegebenen Schaltfrequenz $f_s$, welche insbesondere variieren kann, angesteuert werden, wobei die Schaltfrequenz $f_s$ im Allgemeinen wie folgt definiert ist:

$$f_S = \frac{1}{T_S},$$

wobei $T_s$ eine Schaltperiode der ansteuerbaren Leistungshalbleiterschalter S1, S2, S3, S4 ist. Die Spannung $U_2$ über dem kapazitiven Energiespeicher 4 gemäss Fig. 2, d.h. über der Serienschaltung der zwei Kapazitäten, ist unipolar. Weiterhin ist der Betrag des Mittelwertes der Spannung $U_1$ zwischen dem ersten und zweiten Anschluss 2, 3 bezüglich einer Schaltperiode $T_S$ der ansteuerbaren Leistungshalbleiterschalter S1, S2, S3, S4 entsprechend der Ausführungsform gemäss Fig. 1 stets kleiner als der Betrag des Mittelwertes der Spannung $U_2$ über dem kapazitiven Energiespeicher 4 bezüglich einer Schaltperiode $T_S$ der ansteuerbaren Leistungshalbleiterschalter S1, S2, S3, S4. Die Umrichterschaltung befindet sich also gemäss der vorstehend genannten Abhängigkeit der Spannung $U_1$ zwischen dem ersten und zweiten Anschluss 2 und der Spannung $U_2$ über dem kapazitiven Energiespeicher 4 stets im sogenannten "Boost-Mode". Darüber hinaus ist gemäss Fig. 2 der erste Brückenzweig 5 parallel mit dem kapazitiven Energiespeicher 4, d.h. parallel mit der Serienschaltung der zwei Kapazitäten, verbunden. Entsprechend der Ausführungsform gemäss Fig. 1 kommt die erfindungsgemässe Umrichterschaltung gemäss Fig. 2 bei deren Betrieb, insbesondere als Blindleistungskompensationseinrichtung, damit ohne im wesentlichen konstante Spannung $U_2$, d.h. ohne eine im wesentlichen konstante Gleichspannung, über dem kapazitiven Energiespeicher 4 aus. Vorteilhaft ist dadurch der Wert, d.h. Gesamtkapazitätswert, des kapazitiven Energiespeichers 4 sehr klein, so dass der dem kapazitive Energiespeicher 4 als einfache, damit unkomplizierte und dementsprechend kostengünstige Serienschaltung zweier Kapazitäten realisiert werden kann, die zudem vorteilhafterweise nur einen geringen Platzbedarf aufweist. Die bereits bezüglich der Ausführungsform der Umrichterschaltung gemäss Fig. 1 angeführten Vorteile gelten ebenfalls für die Ausführungsform der Umrichterschaltung nach Fig.2. Mit einem gemäss Fig. 2 ausgeführten Teilumrichtersystem 1 lassen sich drei Schaltspannungsniveaus als Spannung $U_1$ zwischen dem ersten und zweiten Anschluss 2, 3, schalten und somit gegenüber der Ausführungsform nach Fig. 1 weitere Oberschwingungen reduzieren oder ganz eliminieren, weil diese nahezu vernachlässigbar sind beziehungsweise gar nicht erst auftreten. Insgesamt resultieren durch die reduzierten Oberschwingungen der Spannung $U_1$ zwischen dem ersten und zweiten Anschluss 2, 3 dann auch vorteilhaft kleinere beziehungsweise reduzierte Oberschwingungen im Strom über dem ersten und zweiten Anschluss 2, 3. Darüberhinaus ist die durchschnittliche Schaltspannung, welche die Leistungshalbleiterschalter S1, S2, S3, S4 schalten, aufgrund der die Spannungsabsenkung geringer, so dass sich Schaltverluste in den Leistungshalbleiterschaltern S1, S2, S3, S4 mit Vorteil reduzieren lassen.

Gemäss Fig. 2 ist am ersten und zweiten Anschluss 2, 3 des beziehungsweise allgemein eines jeden Teilumrichtersystems 1 ein induktives Element angeschlossen. Das induktive Element bewirkt vorteilhaft einen nahezu sinusförmigen Strom und nimmt den Spannungsrippel der Umrichterschaltung auf, d.h. es entsteht eine nahezu sinusförmige Spannung auf der Seite des Wechselspannungsnetzes. Vorzugsweise ist das induktive Element, wie in Fig. 2 gezeigt, als Sekundärwicklung 9 eines Transformators 8 ausgebildet. Dadurch wird vorteilhaft eine sinusförmige Spannung an der Primärwicklung 9 des Transformators 8 erreicht, wobei diese Spannung zudem sehr einfach durch geeignete Wahl des Übersetzungsverhältnisses zwischen Primärwicklung 9 und Sekundärwicklung 8 eingestellt werden kann.

Es sei erwähnt, dass die Teilumrichterschaltung allgemein als jedwede Umrichterschaltung zur Schaltung von $\geq 2$ Schaltspannungsniveaus (Multi-Level-Umrichterschaltung) bezüglich der Spannung $U_2$ über dem kapazitiven Energiespeicher 4 ausgebildet sein kann, wobei dann der kapazitive Energiespeicher 4 durch eine beliebige Anzahl an Kapazitäten gebildet ist, welche Kapazitäten dann angepasst an die entsprechend ausgeführte Teilumrichterschaltung verschaltet sind.

In Fig. 3 ist eine dritte Ausführungsform einer erfindungsgemässen Umrichterschaltung gezeigt. Die Umrichterschaltung gemäss Fig. 3 umfasst mehrere Teilumrichtersysteme 1, insbesondere drei Teilumrichtersysteme 1, nach Fig. 1, wobei jeweils benachbarte Teilumrichtersysteme 1 gemäss der Vierpoltheorie verkettet miteinander verbunden sind und die kapazitiven Energiespeicher 4 durch einen gemeinsamen kapazitiven Energiespeicher 4 gebildet sind. Vorteilhaft weist die Ausführungsform gemäss Fig. 3 eine hohe Modularität auf, wobei die Gesamtleistung der Umrichterschaltung durch Verkettung weiterer Teilumrichtersysteme 1 nach Fig. 1 vorteilhaft erhöht werden kann. Sämtliche Brückenzweige 5, 6 sind dabei parallel zueinander geschaltet. Gemäss Fig. 3 ist das induktive Element als Sekundärwicklung 9 jeweils eines jedem Teilumrichtersystem 1 zugeordneten Transformators 8 ausgebildet, wobei die Primärwicklungen 7 der Transformatoren 8 gemäss Fig. 3 in Serie geschaltet sind. Mittels der Serienschaltung der Primärwicklungen 7 der Transformatoren 8 kann eine entsprechend hohe Spannung $U_T$ über den seriengeschalteten Primärwicklungen 7 erreicht werden, wobei zu den bereits bezüglich der ersten Ausführungsform der Umrichterschaltung gemäss Fig. 1 genannten Vorteilen zusätzlich Oberschwingungen in der Spannung $U_T$ über den seriengeschalteten Primärwicklungen 7 durch entsprechende Ansteuerung der Leistungshalbleiterschalter S1, S2 der Teilumrichtersysteme 1 vorteilhaft reduziert oder gar ganz eliminiert werden können.

In Fig. 3a ist der zeitliche Verlauf der Spannung $U_2$ über dem kapazitiven Energiespeicher 4 und der Spannung $U_T$ und des Stromes $I_T$ an den seriengeschalteten Primärwicklungen 9 von Transformatoren 8 gemäss der Ausführungsform der Umrichterschaltung nach Fig. 3 dargestellt, wobei ein Wert des kapazitiven Energiespeichers 4 gewählt wurde, der periodische Absenkung der Spannung $U_2$ über dem kapazitiven Energiespeicher 4 in der Grössenordnung von kleiner oder gleich 10% bezüglich des Maximalwertes der Spannung $U_1$ zwischen dem ersten und zweiten Anschluss 2, 3 zulässt, was einer üblichen Spannungsabsenkung nach dem Stand der Technik entspricht. Der Übersichtlichkeit halber ist der Maximalwert der Spannung $U_1$ zwischen dem ersten und zweiten Anschluss 2, 3 in Fig. 3a als waagerechte Linie im zeitlichen Verlauf der Spannung $U_2$ über dem kapazitiven Energiespeicher 4 eingezeichnet. In Fig. 3b ist ferner der zeitliche Verlauf der Spannung $U_2$ über dem kapazitiven Energiespeicher 4 und der Spannung $U_T$ und des Stromes $I_T$ an den seriengeschalteten Primärwicklungen 9 von Transformatoren 8 gemäss der Ausführungsform der Umrichterschaltung nach Fig. 3 dargestellt, wobei ein Wert des kapazitiven Energiespeichers gewählt wurde, der eine periodische Absenkung der Spannung $U_2$ über dem kapazitiven Energiespeicher 4 in der Grössenordnung von grösser oder gleich 30% bezüglich des Maximalwertes der Spannung $U_1$ zwischen dem ersten und zweiten Anschluss 2, 3 zulässt. Der Übersichtlichkeit halber ist der Maximalwert der Spannung $U_1$ zwischen dem ersten und zweiten Anschluss 2, 3 in Fig. 3b als waagerechte Linie im zeitlichen Verlauf der Spannung $U_2$ über dem kapazitiven Energiespeicher 4 eingezeichnet. Wie aus Fig. 3b ersichtlich, schwingt die Spannung $U_2$ über dem kapazitiven Energiespeicher 4 mit einer Spannungsabsenkung in der Grössenordnung von grösser oder gleich 30 bezüglich des Maximalwertes der Spannung $U_1$ zwischen dem ersten und zweiten Anschluss 2, 3 im Gegensatz zu der Spannung $U_2$ über dem kapazitiven Energiespeicher 4 nach Fig. 3a, welche im wesentlichen eine Gleichspannung ist. Daraus resultiert mit Vorteil, dass nach Fig. 3b Oberschwingungen der Spannung $U_T$ und des Stromes $I_T$ an den seriengeschalteten Primärwicklungen 9 von Transformatoren 8 signifikant gegenüber Fig. 3a reduziert beziehungsweise ganz eliminiert sind. Wie aus Fig. 3b zudem ersichtlich, ist der Betrag der Spannung $U_T$ an den seriengeschalteten Primärwicklungen 9 von Transformatoren 8 im wesentlichen in Phase mit der Spannung $U_2$ über dem kapazitiven Energiespeicher 4.

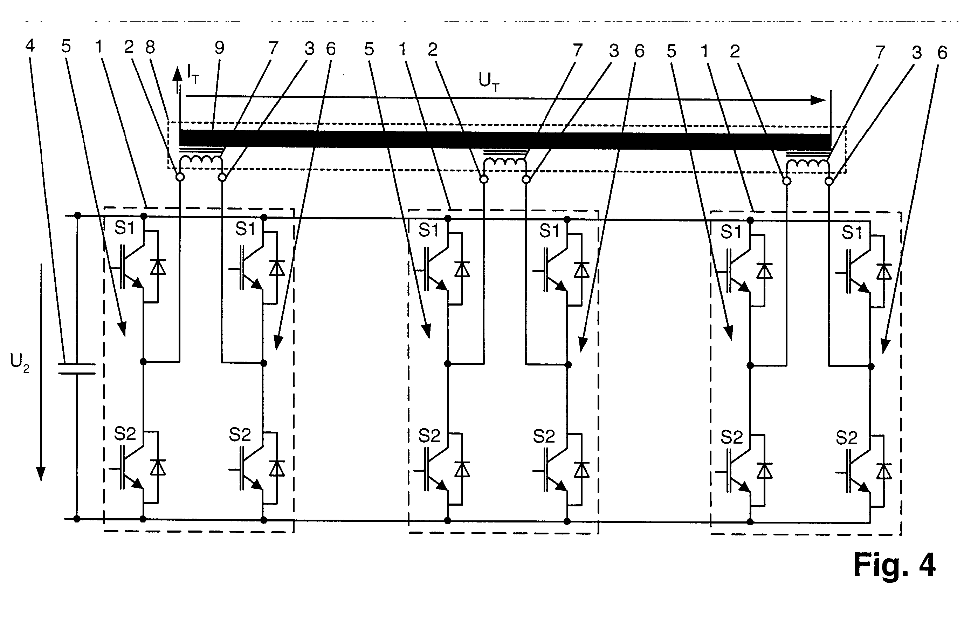

In Fig. 4 ist eine vierte Ausführungsform einer erfindungsgemässen Umrichterschaltung dargestellt. Die Umrichterschaltung gemäss Fig. 4 unterscheidet sich von der Umrichterschaltung gemäss Fig. 3 darin, dass am ersten und zweiten Anschluss 2, 3 eines jeden Teilumrichtersystems 1 ein induktives Element angeschlossen ist, wobei das jeweilige induktive Element als Sekundärwicklung 9 eines einzigen Transformators 8 ausgebildet ist und die Sekundärwicklungen 9 des Transformators 8 gemäss Fig. 4 mit der einzigen Primärwicklung 7 des Transformators 8 magnetisch gekoppelt sind. Gegenüber der Ausführungsform der erfindungsgemässen Umrichterschaltung nach Fig. 3 ist bei der Ausführungsform der erfindungsgemässen Umrichterschaltung gemäss Fig. 4 nur ein einziger Transformator 8 mit einer Primärwicklung 9 und Sekundärwicklungen 7 entsprechend der Anzahl Teilumrichtersysteme 1 vorgesehen. Die Umrichterschaltung nach Fig. 4 mit nur einem Transformator 8 stellt damit eine einfach zu realisierende, platzsparende und damit kostengünstige Lösung dar.

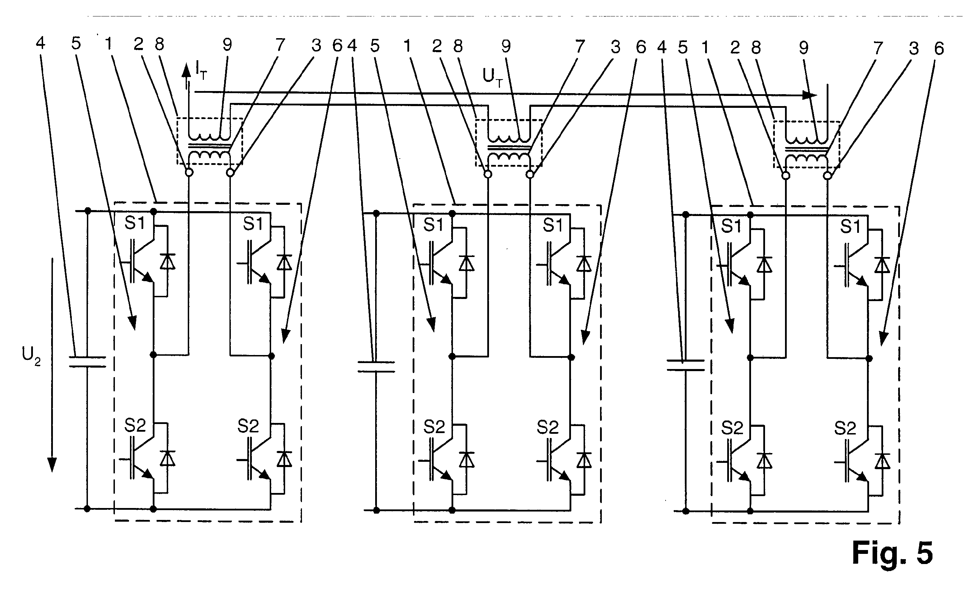

In Fig. 5 ist eine fünfte Ausführungsform einer erfindungsgemässen Umrichterschaltung dargestellt. Gemäss Fig. 5 umfasst die Umrichterschaltung mehrere Teilumrichtersysteme 1, insbesondere drei Teilumrichtersysteme 1, nach Fig. 1, wobei diese Teilumrichtersysteme 1 im Unterschied zu Fig. 3 und Fig. 4 nicht verkettet sind und jedes Teilumrichtersystem 1 separat mit einem kapazitiven Energiespeicher 4 gemäss Fig. 1 verbunden ist. Die Teilumrichtersysteme 1 sind demnach vorteilhaft galvanisch voneinander getrennt. Gemäss Fig. 5 ist das induktive Element als Sekundärwicklung 9 jeweils eines jedem Teilumrichtersystem 1 zugeordneten Transformators 8 ausgebildet, wobei die Primärwicklungen 7 der Transformatoren 8 gemäss Fig. 5 in Serie geschaltet sind. Mittels der Serienschaltung der Primärwicklungen 7 der Transformatoren 8 kann eine entsprechend hohe Spannung $U_T$ über den seriengeschalteten Primärwicklungen 7 erreicht werden, wobei zu den bereits bezüglich der ersten Ausführungsform der Umrichterschaltung gemäss Fig. 1 genannten Vorteilen zusätzlich Oberschwingungen in der Spannung $U_T$ über den seriengeschalteten Primärwicklungen 7 durch entsprechende Ansteuerung der Leistungshalbleiterschalter S1, S2 der Teilumrichtersysteme 1 vorteilhaft reduziert oder gar ganz eliminiert werden können.

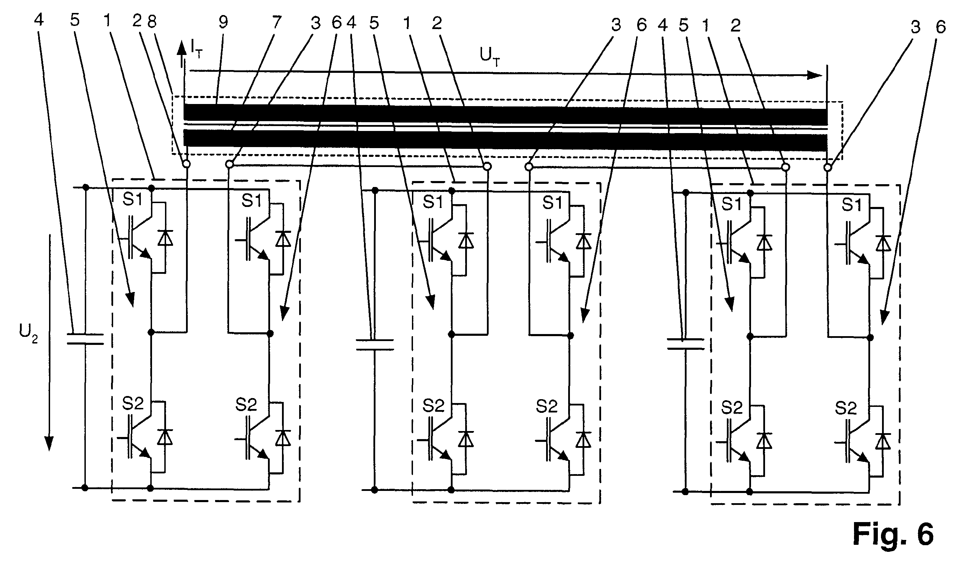

In Fig. 6 ist eine sechste Ausführungsform einer erfindungsgemässen Umrichterschaltung dargestellt. Die Umrichterschaltung gemäss Fig. 6 unterscheidet sich von der Umrichterschaltung gemäss Fig. 5 darin, dass die Teilumrichtersysteme 1 über die ersten und zweiten Anschlüsse 2, 3 seriell miteinander verbunden sind. Die Serienschaltung der Teilumrichtersysteme 1 ist an ein induktives Element angeschlossen, wobei das induktive Element als Sekundärwicklung 9 eines einzigen Transformators 8 ausgebildet ist und die Sekundärwicklung 9 des Transformators 8 gemäss Fig. 6 mit der Primärwicklung 7 des Transformators 8 magnetisch gekoppelt ist. Gegenüber der Ausführungsform der erfindungsgemässen Umrichterschaltung nach Fig. 5 ist bei der Ausführungsform der erfindungsgemässen Umrichterschaltung gemäss Fig. 6 nur ein einziger Transformator 8 mit einer Primärwicklung 9 und einer Sekundärwicklung 7 vorgesehen, so dass die Umrichterschaltung nach Fig. 6 einfach zu realisieren, platzsparend und damit kostengünstig ist.

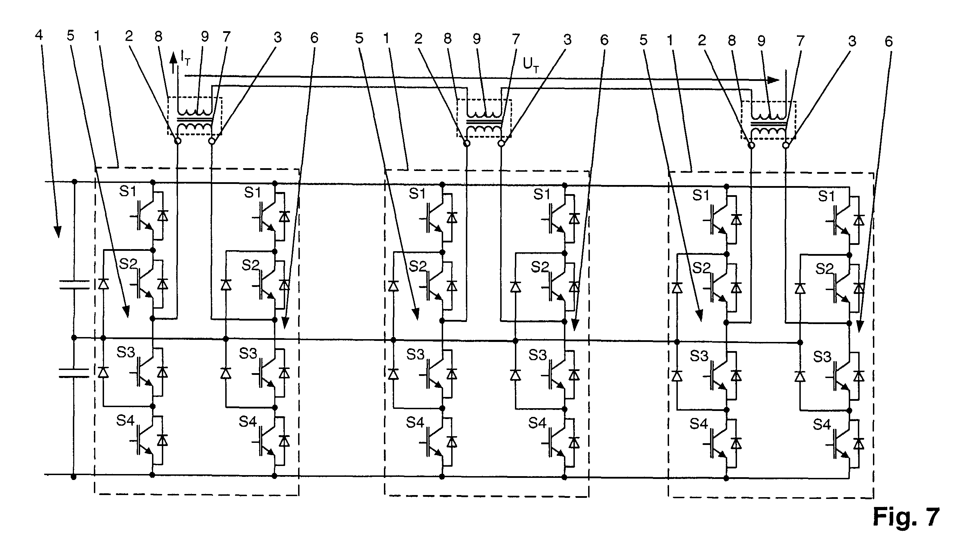

In Fig. 7 ist darüber hinaus eine siebte Ausführungsform einer erfindungsgemässen Umrichterschaltung dargestellt. Die Umrichterschaltung gemäss Fig. 7 umfasst mehrere Teilumrichtersysteme 1, insbesondere drei Teilumrichtersysteme 1, nach Fig. 2, wobei jeweils benachbarte Teilumrichtersysteme 1 gemäss der Vierpoltheorie verkettet miteinander verbunden sind und die kapazitiven Energiespeicher 4 durch einen gemeinsamen kapazitiven Energiespeicher 4 gebildet sind. Vorteilhaft weist die Ausführungsform gemäss Fig. 7 eine hohe Modularität auf, wobei die Gesamtleistung der Umrichterschaltung durch Verkettung weiterer Teilumrichtersysteme 1 nach Fig. 2 vorteilhaft erhöht werden kann. Sämtliche Brückenzweige 5, 6 sind dabei parallel zueinander geschaltet. Gemäss Fig. 7 ist das induktive Element als Sekundärwicklung 9 jeweils eines jedem Teilumrichtersystem 1 zugeordneten Transformators 8 ausgebildet, wobei die Primärwicklungen 7 der Transformatoren 8 gemäss Fig. 7 in Serie geschaltet sind. Mittels der Serienschaltung der Primärwicklungen 7 der Transformatoren 8 kann eine entsprechend hohe Spannung $U_T$ über den seriengeschalteten Primärwicklungen 7 erreicht werden, wobei zu den bereits bezüglich der zweiten Ausführungsform der Umrichterschaltung gemäss Fig. 2 genannten Vorteilen zusätzlich Oberschwingungen in der Spannung $U_T$ über den seriengeschalteten Primärwicklungen 7 durch entsprechende Ansteuerung der Leistungshalbleiterschalter S1, S2, S3, S4 der Teilumrichtersysteme 1 vorteilhaft reduziert oder gar ganz eliminiert werden können.

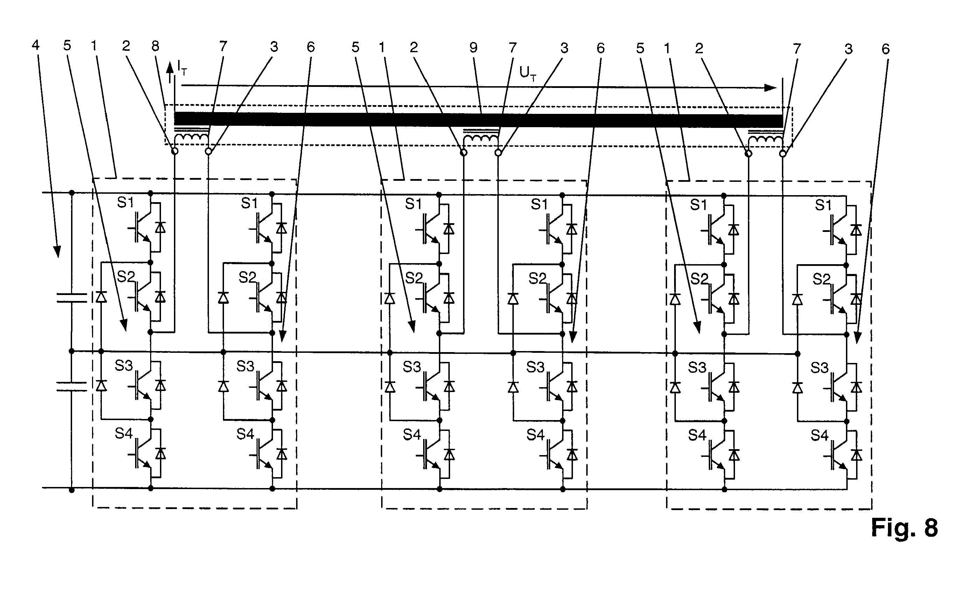

In Fig. 8 ist eine achte Ausführungsform einer erfindungsgemässen Umrichterschaltung dargestellt. Die Umrichterschaltung gemäss Fig. 8 unterscheidet sich von der Umrichterschaltung gemäss Fig. 7 darin, dass am ersten und zweiten Anschluss 2, 3 eines jeden Teilumrichtersystems 1 ein induktives Element angeschlossen ist, wobei das jeweilige induktive Element als Sekundärwicklung 9 eines einzigen Transformators 8 ausgebildet ist und die Sekundärwicklungen 9 des Transformators 8 gemäss Fig. 8 mit der einzigen Primärwicklung 7 des Transformators 8 magnetisch gekoppelt sind. Gegenüber der Ausführungsform der erfindungsgemässen Umrichterschaltung nach Fig. 7 ist bei der Ausführungsform der erfindungsgemässen Umrichterschaltung gemäss Fig. 8 nur ein einziger Transformator 8 mit einer Primärwicklung 9 und Sekundärwicklungen 7 entsprechend der Anzahl Teilumrichtersysteme 1 vorgesehen. Die Umrichterschaltung nach Fig. 8 mit nur einem Transformator 8 stellt damit eine einfach zu realisierende, platzsparende und damit kostengünstige Lösung dar.

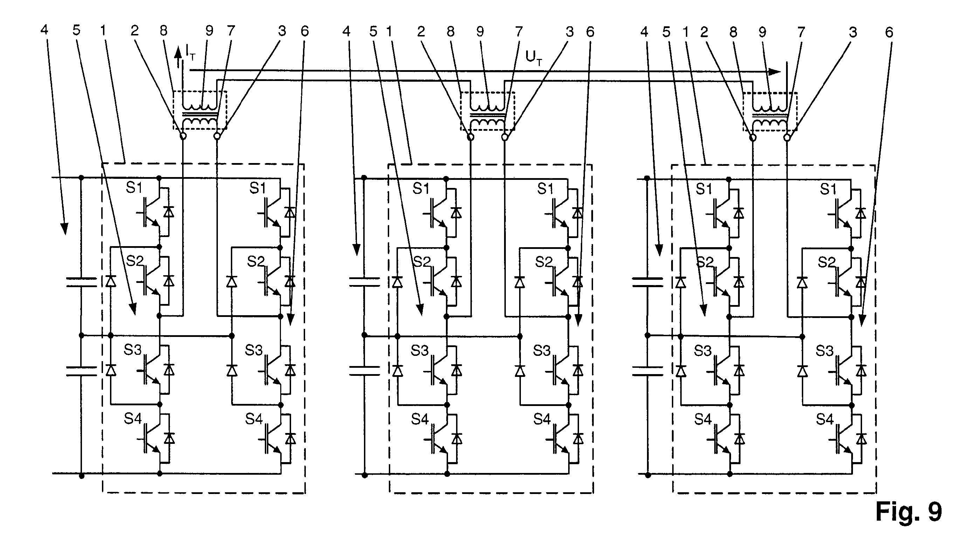

In Fig. 9 ist eine neunte Ausführungsform einer erfindungsgemässen Umrichterschaltung gezeigt. Gemäss Fig. 9 umfasst die Umrichterschaltung mehrere Teilumrichtersysteme 1, insbesondere drei Teilumrichtersysteme 1, nach Fig. 2, wobei diese Teilumrichtersysteme 1 im Unterschied zu Fig. 7 und Fig. 8 nicht verkettet sind und jedes Teilumrichtersystem 1 separat mit einem kapazitiven Energiespeicher 4 gemäss Fig. 2 verbunden ist. Die Teilumrichtersysteme 1 sind demnach vorteilhaft galvanisch voneinander getrennt. Gemäss Fig. 9 ist das induktive Element als Sekundärwicklung 9 jeweils eines jedem Teilumrichtersystem 1 zugeordneten Transformators 8 ausgebildet, wobei die Primärwicklungen 7 der Transformatoren 8 gemäss Fig. 9 in Serie geschaltet sind. Mittels der Serienschaltung der Primärwicklungen 7 der Transformatoren 8 kann eine entsprechend hohe Spannung $U_T$ über den seriengeschalteten Primärwicklungen 7 erreicht werden, wobei zu den bereits bezüglich der ersten Ausführungsform der Umrichterschaltung gemäss Fig. 2 genannten Vorteilen zusätzlich Oberschwingungen in der Spannung $U_T$ über den seriengeschalteten Primärwicklungen 7 durch entsprechende Ansteuerung der Leistungshalbleiterschalter S1, S2 der Teilumrichtersysteme 1 vorteilhaft reduziert oder gar ganz eliminiert werden können.

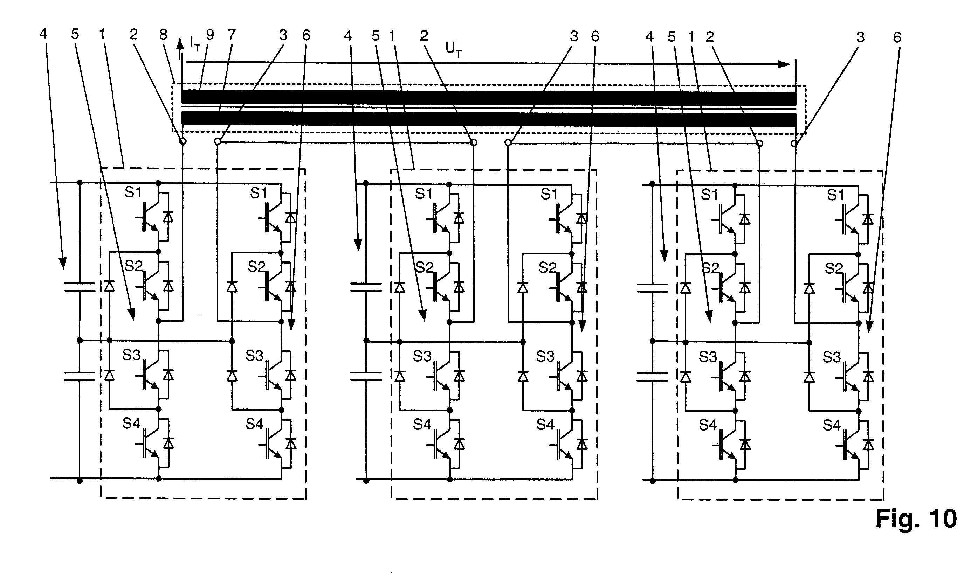

In Fig. 10 ist eine zehnte Ausführungsform einer erfindungsgemässen Umrichterschaltung dargestellt. Die Umrichterschaltung gemäss Fig. 10 unterscheidet sich von der Umrichterschaltung gemäss Fig. 9 darin, dass die Teilumrichtersysteme 1 über die ersten und zweiten Anschlüsse 2, 3 seriell miteinander verbunden sind. Die Serienschaltung der Teilumrichtersysteme 1 ist an ein induktives Element angeschlossen, wobei das induktive Element als Sekundärwicklung 9 eines einzigen Transformators 8 ausgebildet ist und die Sekundärwicklung 9 des Transformators 8 gemäss Fig. 6 mit der Primärwicklung 7 des Transformators 8 magnetisch gekoppelt ist. Gegenüber der Ausführungsform der erfindungsgemässen Umrichterschaltung nach Fig. 9 ist bei der Ausführungsform der erfindungsgemässen Umrichterschaltung gemäss Fig. 10 nur ein einziger Transformator 8 mit einer Primärwicklung 9 und einer Sekundärwicklung 7 vorgesehen, so dass die Umrichterschaltung nach Fig. 10 einfach zu realisieren, platzsparend und damit kostengünstig ist.

Zum Betrieb der erfindungsgemässen Umrichterschaltung nach den Ausführungsformen der Fig. 1 bis Fig. 10, insbesondere zur Blindleistungskompensation, hat es sich verfahrensmässig als besonders vorteilhaft erwiesen, dass die Leistungshalbleiterschalter S1, S2 beziehungsweise S1, S2, S3, S4 eines jeden Teilumrichtersystems 1 gemäss Fig. 1 beziehungsweise Fig. 2 derart angesteuert werden, dass der Energieverlauf im kapazitiven Energiespeicher 4 im wesentlichen sinusförmig, insbesondere mit einem Gleich-Energieanteil, und mit definierter Phasenlage geführt wird. Damit wird die bereits erwähnte Spannungsabsenkung in der Grössenordnung von grösser oder gleich 30% bezüglich des Maximalwertes der Spannung $U_1$ zwischen dem ersten und zweiten Anschluss 2, 3 erreicht. Die Ausgangsleistüng am ersten und zweiten Anschluss 2, 3, insbesondere zur Blindleistungskompensation, stellt sich dann automatisch ein. Alternativ ist es auch denkbar, die Leistungshalbleiterschalter S1, S2 beziehungsweise S1, S2, S3, S4 eines jeden Teilumrichtersystems 1 gemäss Fig. 1 beziehungsweise Fig. 2 derart anzusteuern, dass die bereits erwähnte Spannungsabsenkung in der Grössenordnung von grösser oder gleich 30% bezüglich des Maximalwertes der Spannung $U_1$ zwischen dem ersten und zweiten Anschluss 2, 3 nach einer definierten Spannungssollwertkurve erfolgt. Alternativ dazu können die Leistungshalbleiterschalter S1, S2 beziehungsweise S1, S2, S3, S4 eines jeden Teilumrichtersystems 1 gemäss Fig. 1 beziehungsweise Fig. 2 auch derart angesteuert werden, dass die bereits erwähnte Spannungsabsenkung in der Grössenordnung von grösser oder gleich 30% bezüglich des Maximalwertes der Spannung $U_1$ zwischen dem ersten und zweiten Anschluss 2, 3 mittels einer definierten Stromsollwertkurve erfolgt, wobei der Strom aus dem kapazitiven Energiespeicher 4 dieser Stromsollwertkurve folgt. Die Spannung $U_2$ über dem kapazitiven Energiespeicher 4 stellt sich dann automatisch ein. Selbstverständlich können die vorstehend genannten Verfahren zum Betrieb der erfindungsgemässen Umrichterschaltung untereinander kombiniert werden.

**Bezugszeichenliste**

1    Teilumrichtersystem
2    erster Anschluss
3    zweiter Anschluss
4    kapazitiven Energiespeicher
5    erster Brückenzweig

6      zweiter Brückenzweig
7      Primärwicklung
8      Transformator
9      Sekundärwicklung
S1    erste Leistungshalbleiterschalter
S2    zweiter Leistungshalbleiterschalter
S3    dritter Leistungshalbleiterschalter
S4    vierter Leistungshalbleiterschalter
S5    fünfter Leistungshalbleiterschalter
S6    sechster Leistungshalbleiterschalter

**Patentansprüche**

**1.** Umrichterschaltung mit mindestens einem Teilumrichtersystem (1), wobei bei jedem Teilumrichtersystem (1) ein erster und ein zweiter Anschluss (2, 3) vorgesehen ist und jedes Teilumrichtersystem (1) eine Vielzahl an ansteuerbaren Leistungshalbleiterschaltern (S1, S2, S3, S4) aufweist, und
mit einer mit einem Teilumrichtersystem (1) verbundenen kapazitiven Energiespeicher (4), wobei die Spannung ($U_2$) über dem kapazitiven Energiespeicher (4) unipolar ist,
**dadurch gekennzeichnet,**
**dass** der kapazitive Energiespeicher (4) einen Wert aufweist, der eine periodische Absenkung der Spannung ($U_2$) über dem kapazitiven Energiespeicher (4) in der Grössenordnung von grösser oder gleich 30% bezüglich des Maximalwertes der Spannung ($U_1$) zwischen dem ersten und zweiten Anschluss (2, 3) zulässt, wobei eine Periode der Absenkung einer halben Netzperiode eines an die Umrichterschaltung anschliessbaren Wechselspannungsnetzes entspricht.

**2.** Umrichterschaltung nach Anspruch 1, **dadurch gekennzeichnet, dass** der kapazitive Energiespeicher (4) einen Wert aufweist, der eine periodische Absenkung der Spannung ($U_2$) über dem kapazitiven Energiespeicher (4) in der Grössenordnung von 50% bis 95% bezüglich des Maximalwertes der Spannung ($U_1$) zwischen dem ersten und zweiten Anschluss (2, 3) zulässt, wobei eine Periode der Absenkung einer halben Netzperiode eines an die Umrichterschaltung anschliessbaren Wechselspannungsnetzes entspricht.

**3.** Umrichterschaltung nach Anspruch 1 oder 2, **dadurch gekennzeichnet, dass** der kapazitive Energiespeicher (4) als eine Kapazität ausgebildet ist,
dass jedes Teilumrichtersystem (1) einen ersten Brückenzweig (5) und einen zu dem ersten Brückenzweig (5) parallel geschalteten zweiten Brückenzweig (6) aufweist, wobei jeder Brückenzweig (5, 6) zwei in Serie geschaltete ansteuerbare Leistungshalbleiterschalter (S1, S2) umfasst und der Verbindungspunkt der ansteuerbare Leistungshalbleiterschalter (S1, S2) des ersten Brückenzweiges (5) den ersten Anschluss (2) und der Verbindungspunkt der ansteuerbare Leistungshalbleiterschalter (S1, S2) des zweiten Brückenzweiges (6) den zweiten Anschluss (3) bildet, und
dass der erste Brückenzweig (5) parallel mit dem kapazitive Energiespeicher (4) verbunden ist.

**4.** Umrichterschaltung nach Anspruch 1 oder 2, **dadurch gekennzeichnet, dass** der kapazitive Energiespeicher (4) als eine Serienschaltung aus zwei Kapazitäten ausgebildet ist, dass jedes Teilumrichtersystem (1) einen ersten Brückenzweig (5) und einen zu dem ersten Brückenzweig (5) parallel geschalteten zweiten Brückenzweig (6) aufweist, wobei jeder Brückenzweig (5, 6) einen ersten, zweiten, dritten und vierten ansteuerbaren Leistungshalbleiterschalter (S1, S2, S3, S4) aufweist und der erste, zweite, dritte und vierte ansteuerbaren Leistungshalbleiterschalter (S1, S2, S3, S4) in Serie geschaltet sind und der Verbindungspunkt des zweiten ansteuerbaren Leistungshalbleiterschalters (S2) des ersten Brückenzweiges (5) mit dem dritten ansteuerbaren Leistungshalbleiterschalter (S3) des ersten Brückenzweiges (5) den ersten Anschluss (2) und der Verbindungspunkt des zweiten ansteuerbaren Leistungshalbleiterschalters (S2) des zweiten Brückenzweiges (6) mit dem dritten ansteuerbaren Leistungshalbleiterschalter (S3) des zweiten Brückenzweiges (6) den zweiten Anschluss (3) bildet, und
dass der erste Brückenzweig (5) parallel mit dem kapazitiven Energiespeicher (4) verbunden ist.

**5.** Umrichterschaltung nach einem der Ansprüche 3 oder 4, **dadurch gekennzeichnet, dass** im Falle mehrerer Teilumrichtersysteme (1) jeweils benachbarte Teilumrichtersysteme (1) verkettet miteinander verbunden sind, wobei die kapazitiven Energiespeicher (4) durch einen gemeinsamen kapazitiven Energiespeicher (4) gebildet sind.

**6.** Umrichterschaltung nach Anspruch 5, **dadurch gekennzeichnet, dass** im Falle mehrerer Teilumrichtersysteme (1) sämtliche Brückenzweige (5, 6) parallel zueinander geschaltet sind.

**7.** Umrichterschaltung nach einem der vorhergehenden Ansprüche, **dadurch gekennzeichnet, dass** am ersten und zweiten Anschluss (2, 3) eines jeden Teilumrichtersystems (1) ein induktives Element angeschlossen ist.

**8.** Umrichterschaltung nach Anspruch 7, **dadurch gekennzeichnet, dass** das induktive Element als Sekundärwicklung (9) jeweils eines jedem Teilumrichtersystem (1) zugeordneten Transformators (8) ausgebildet ist.

**9.** Umrichterschaltung nach Anspruch 8, **dadurch gekennzeichnet, dass** im Falle mehrerer Teilumrichtersysteme (1) die Primärwicklungen (7) der Transformatoren (8) in Serie geschaltet sind.

**10.** Umrichterschaltung nach Anspruch 7, **dadurch gekennzeichnet, dass** das induktive Element als Sekundärwicklung (9) eines Transformators (8) ausgebildet ist.

**11.** Umrichterschaltung nach Anspruch 10, **dadurch gekennzeichnet, dass** im Falle mehrerer Teilumrichtersysteme (1) die Sekundärwicklungen (9) des Transformators (8) mit der Primärwicklung (7) des Transformators (8) magnetisch gekoppelt sind.

**12.** Umrichterschaltung nach einem der Ansprüche 3 oder 4, **dadurch gekennzeichnet, dass** im Falle mehrerer Teilumrichtersysteme (1) die Teilumrichtersysteme (1) über die ersten und zweiten Anschlüsse (2, 3) seriell miteinander verbunden sind.

**13.** Umrichterschaltung nach Anspruch 12, **dadurch gekennzeichnet, dass** an die Serienschaltung der Teilumrichtersysteme (1) ein induktives Element angeschlossen ist.

**14.** Umrichterschaltung nach Anspruch 13, **dadurch gekennzeichnet, dass** das induktive Element als Sekundärwicklung (9) eines Transformators (8) ausgebildet ist, und dass die Sekundärwicklung (9) des Transformators (8) mit der Primärwicklung (7) des Transformators (8) magnetisch gekoppelt ist.

**Fig. 1**

**Fig. 2**

Fig. 3

**Fig. 3a**

**Fig. 3b**

**Fig. 4**

Fig. 5

Fig. 6

EP 1 701 436 A1

Fig. 7

Fig. 8

EP 1 701 436 A1

Fig. 9

Fig. 10

Europäisches
Patentamt

**EUROPÄISCHER RECHERCHENBERICHT**

Nummer der Anmeldung

EP 05 40 5240

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | LIANG Y ET AL: "A NEW TYPE OF STATCOM BASED ON CASCADING VOLTAGE-SOURCE INVERTERS WITH PHASE-SHIFTED UNIPOLAR SPWM"<br>IEEE TRANSACTIONS ON INDUSTRY APPLICATIONS, IEEE SERVICE CENTER, PISCATAWAY, NJ, US,<br>Bd. 35, Nr. 5, September 1999 (1999-09), Seiten 1118-1123, XP000924264<br>ISSN: 0093-9994<br>* Absatz [0III]; Abbildungen 1,5 *<br>----- | 1-11 | H02M7/48<br>H02J3/18 |
| X | B. SIGH, K. AL-HADDAD, A. CHANDRA: "A review of active filters for power quality improvement"<br>IEEE TRANSACTIONS ON INDUSTRIAL ELECTRONICS,<br>Bd. 46, Oktober 1999 (1999-10), Seiten 960-971, XP002351723<br>* Absatz [000V]; Abbildungen 9-11 *<br>----- | 1-11 | |
| A | TAN P C ET AL: "A robust multilevel hybrid compensation system for 25kV electrified railway applications"<br>PESC'03. 2003 IEEE 34TH. ANNUAL POWER ELECTRONICS SPECIALISTS CONFERENCE. CONFERENCE PROCEEDINGS. ACAPULCO, MEXICO, JUNE 15 - 19, 2003, ANNUAL POWER ELECTRONICS SPECIALISTS CONFERENCE, NEW YORK, NY : IEEE, US,<br>Bd. VOL. 4 OF 4. CONF. 34,<br>15. Juni 2003 (2003-06-15), Seiten 1020-1025, XP010647421<br>ISBN: 0-7803-7754-0<br>* Absatz [0III]; Abbildung 2 *<br>----- | 3-11 | RECHERCHIERTE SACHGEBIETE (Int.Cl.7)<br><br>H02M<br>H02J |

-/--

Der vorliegende Recherchenbericht wurde für alle Patentansprüche erstellt

| Recherchenort | Abschlußdatum der Recherche | Prüfer |
|---|---|---|
| Den Haag | 28. Oktober 2005 | Imbernon, L |

EPO FORM 1503 03.82 (P04C03)

**Europäisches Patentamt**

**EUROPÄISCHER RECHERCHENBERICHT**

Nummer der Anmeldung

EP 05 40 5240

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | GHIARA T ET AL: "High power factor control system in multilevel converters for AC heavy traction drives" IEEE, 11. März 1990 (1990-03-11), Seiten 672-680, XP010004729 * Absatz [002.]; Abbildung 3 * ----- | 3-11 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| Den Haag | 28. Oktober 2005 | Imbernon, L |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes
   Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2146848 C1